# EUROPEAN PATENT APPLICATION

(11) **EP 4 596 340 A1**
(43) Date of publication of application: **06.08.2025**
(21) Application number: 24154958.3
(22) Date of filing: 31.01.2024
(51) Int. Cl.: B60T 7/04, B60T 8/32, B60T 13/58

(54) **METHOD AND DEVICE FOR DYNAMICALLY ADJUSTING A DRIVING PEDAL CHARACTERISTIC**

(71) Applicant: KNORR-BREMSE Systeme für Nutzfahrzeuge GmbH, 80809 München (DE)
(72) Inventor: Venegas Diaz, Fernando, 80797 Munich (DE); Kutas, Áron, 6070 Izsák (HU); Lipták, Gábor, 1046 Budapest (HU)

(57) **Abstract**

Method for dynamically adjusting a driving pedal characteristic (2) of a vehicle, the method comprises the following steps:
- step S1: providing a first adjustment point (AP1) of the driving pedal characteristic (2) defined by a first driving pedal position and a first deceleration demand;
- step S2: providing a second adjustment point (AP2) of the driving pedal characteristic (2) defined by a second driving pedal position and a second deceleration demand;
- step S3: receiving a current driving pedal position as a driver input;
- step S4: adjusting a calculation method for calculating a current deceleration demand, wherein the calculation method is based on the current driving pedal position and the first adjustment point (AP1) and the second adjustment point (AP2);
- step S5: calculating the current deceleration demand according to the adjusted calculation method; and
- step S6: outputting the current deceleration demand to the vehicle.

## Description

The present invention relates to a method and a device for dynamically adjusting a driving pedal characteristic. Further, the present invention relates to a vehicle configured to carry out dynamic adjusting of a driving pedal characteristic.

In particular, the invention is directed to dynamically adjusting a One Pedal Drive (OPD) characteristic.

The OPD function is mostly a driver comfort feature. It allows the vehicle driver to control acceleration and deceleration demands, with one single pedal, wherein deceleration demands are generated when the pedal is released or when the pedal is only operated between a pedal position of 0 % (fully released) up to a defined pedal position threshold. The deceleration demand caused by OPD function (release of accelerator or driving pedal), must be designed in a way that it guarantees a comfortable feeling by the driver with constantly changing driving conditions. It may be a further purpose of the OPD function, to use the brake pedal only in emergency situations, when the deceleration resulting from the deceleration demand of the OPD function is not sufficient.

OPD systems according to the prior art are usually characterized either by a fixed and constant deceleration demand characteristic when the pedal position is below a predetermined pedal position threshold or by a linear deceleration demand starting from a minimum deceleration demand at a predetermined pedal position threshold to a maximum deceleration demand at a fully released accelerator pedal.

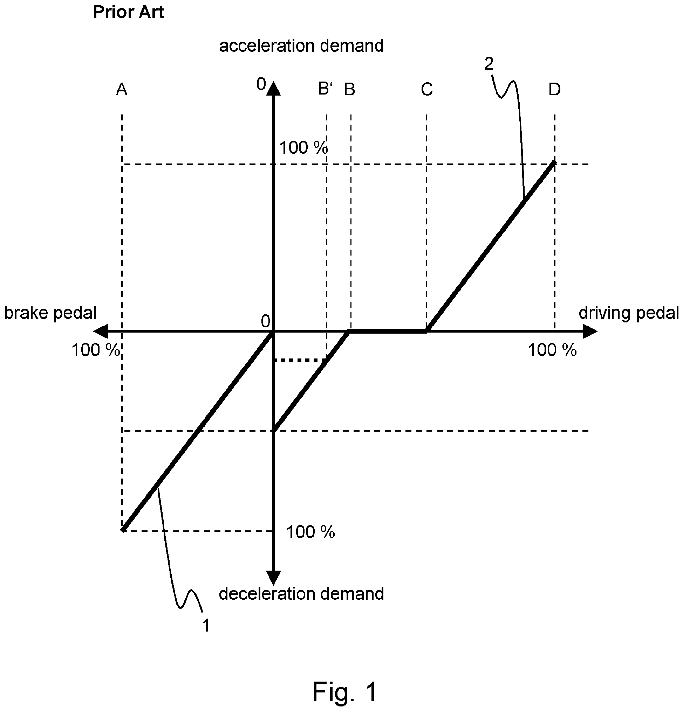

Both versions of such prior art systems are shown in **Fig. 1****.**

On the axis extending to the right, an input value from driving pedal is shown from 0 % to 100 %, wherein the maximum input value of 100 % is on the right. For comparison, on the axis extending to the left, an input value from a brake pedal is shown from 0 % to 100 %, wherein the maximum input value of 100 % is on the left at 100 % brake pedal input.

On the axis extending upwards, an acceleration demand is shown from 0 % to 100 %, wherein the maximum acceleration demand is at the top of the axis at 100 %. On the axis extending downwards, a deceleration demand is shown from 0 % to 100 %, wherein the maximum deceleration demand is at the lowest point of the axis at 100 %.

In general, a pedal characteristic describes a correlation between an input value of a pedal (a pedal input or a pedal position) respectively a driver's input, in particular describing how much the pedal is pressed by a driver, and an output value of the pedal, in particular a deceleration demand value or an acceleration demand value that is supplied as an input value to further systems or devices of the vehicle such as a deceleration device and a brake unit or a brake system. Regarding OPD, an output value of one pedal, like a driving pedal, can comprise a deceleration demand value or an acceleration demand value depending on the input value.

In Fig. 1, a brake pedal characteristic 1 and a driving pedal characteristic 2 are shown. The brake pedal characteristic 1 extends from zero brake pedal deceleration demand at an input value of 0 % to 100 % brake pedal deceleration demand at 100 % of the brake pedal input value, which corresponds to the overall maximum deceleration demand. This point, the point of maximum deceleration demand, is marked-up with an A.

The driving pedal characteristic 2 extends between the input value of 0 % and 100 % of the driving pedal. The shown accelerator pedal characteristic 2 shows a typical OPD characteristic according to the prior art, wherein by input via the driving pedal, a driver can accelerate and decelerate the vehicle by operating only the driving pedal between an input value of 0 % and 100 %. Between an input value of 0 % and a point B, a deceleration demand is generated by the driving pedal. That means that if a driver operates the driving pedal in this section, a deceleration demand is output e.g., from the driving pedal. Further, between the points B and C, the driving pedal characteristic 2 is zero. That means, that in this section neither a deceleration nor an acceleration demand is generated by the driving pedal characteristic 2. In general, this is a section causing the vehicle to coast. In the section defined by the points C and D, wherein D is the point of maximum acceleration demand, the input value of the driving pedal causes a driving demand by the driving pedal characteristic 2.

Between the input value of 0 % and the point B, the typical versions of an OPD characteristic according to the prior art are shown. By a solid line, a linear deceleration demand is shown starting from a minimum deceleration demand at a predetermined pedal position threshold (point B) to a maximum deceleration demand at a fully released driving pedal. By a dotted line the second version according to the prior art is shown, wherein a fixed and constant deceleration demand value is output when the pedal position is below a predetermined driving pedal position. This predetermined driving pedal position is marked-up by the point B'.

However, both approaches for realizing a driving pedal characteristic for generating a deceleration demand for some driving pedal positions are preset approaches and the aim for realizing a driving situation dependent driving pedal characteristic is not reached thereby. As reported by professional drivers, these approaches are not producing a comfortable feeling in all driving situations or at all driving conditions.

Therefore, it is an object of the present invention, to overcome this problem by allowing adjustment of the driving pedal characteristic.

This object is achieved by the subject-matter of the independent claims. Advantageous embodiments are the subject-matter of the dependent claims.

A method for dynamically adjusting a driving pedal characteristic of a vehicle, in particular, an OPD characteristic of a vehicle, is disclosed, wherein the driving pedal characteristic defines a correlation between a driving pedal position and a deceleration demand.

The method comprises the following steps:
- step S1: providing a first adjustment point of the driving pedal characteristic defined by a first driving pedal position and a first deceleration demand;
- step S2: providing a second adjustment point of the driving pedal characteristic defined by a second driving pedal position and a second deceleration demand;
- step S3: receiving a current driving pedal position as a driver input;
- step S4: adjusting a calculation method for calculating a current deceleration demand, wherein the calculation method is based on the current driving pedal position and the first adjustment point and the second adjustment point;
- step S5: calculating the current deceleration demand according to the adjusted calculation method; and
- step S6: outputting the current deceleration demand to the vehicle.

The order of the steps is not limited to the order above. Instead, steps S1 and S2 may be carried out simultaneously or step S2 may be carried out before step S1. Additionally or alternatively, step S3 may be carried out before step S1 or before step S2 or before step S1 and S2.

The method is preferably configured to be carried out by a device as described below. The device preferably comprises electronic control means to carry out the method, and/or the device is configured as a driving pedal.

All method steps S1 to S6 may be carried out by one single device. However, it may also be possible to carry out some method steps or all by different devices.

Outputting the current deceleration demand to the vehicle according to step S6 means that the deceleration demand is output as a value, in particular a target value, to other devices and systems of the vehicle. E.g., a control device of the vehicle may use the value as a target value for a closed-loop control or for an open-loop control of a deceleration device like an electric machine used as a generator or a hydraulic or electric retarder or a service brake like a hydraulic, pneumatic or electro-mechanic friction brake.

The following explanations relate to an adjusting of a driving pedal characteristic. The driving pedal characteristic may be configured as an OPD characteristic. I.e., that the deceleration demand generated by the OPD characteristic is sufficient to drive respectively decelerate the vehicle in normal (not emergency) traffic situations. However, the more general term "driving pedal characteristic" includes besides the OPD characteristic further driving pedal characteristics that generate deceleration demands not sufficient to decelerate the vehicle in every normal (not emergency) traffic situation.

The deceleration of the vehicle, caused by the current deceleration demand output by method step S6, may be caused by an electric machine used as a generator or by a hydraulic or electric retarder or by a service brake like a hydraulic, pneumatic or electro-mechanic friction brake.

According to step S4, a calculation method is adjusted for calculating a current deceleration demand, wherein the calculation method is based on the current driving pedal position and the first adjustment point and the second adjustment point. This adjustment of the calculation method changes or adjusts the characteristic of the vehicle since the reaction of the driving pedal characteristic to current driving pedal positions between the first adjustment point and the second adjustment point is thereby adjusted.

Preferably, the method is carried out during the operation of the vehicle. I.e., when the vehicle is driven by a driver. I.e., the method is primarily provided to adjust the driving pedal characteristic while the driver is controlling the moving vehicle so that the driver has always a driving pedal with a characteristic suitable for the current situation.

Preferably, a third adjustment point for the driving pedal characteristic is provided, wherein the adjusting of the calculation method according to step S4 is additionally based on the third adjustment point. This allows a better adjustment of the calculation method according to step S4. The third adjustment point may be specified in detail as described later. The third adjustment point may be defined by a third driving pedal position and a third deceleration demand.

Preferably, the first adjustment point defines a transition from a portion of the driving pedal characteristic comprising deceleration demands, in particular comprising only deceleration demands, to a portion of the driving pedal characteristic comprising acceleration demands, in particular comprising only acceleration demands, or to a portion of the driving pedal characteristic comprising no acceleration or deceleration demand, in particular comprising a demand of zero. The first adjustment point may therefore define the transition of the driving pedal characteristic to a coasting portion of the driving pedal characteristic (no acceleration or deceleration demand) with increasing driving pedal positions or to a portion of the driving pedal characteristic, wherein the deceleration demands changes to acceleration demands with increasing driving pedal positions. In particular, the first adjustment point may define the transition by increasing driving pedal input of the portion of the driving pedal characteristic with deceleration demands to a coasting portion comprising zero deceleration demand.

Preferably, the first adjustment point is the point of the driving pedal characteristic with the lowest deceleration demand value. This point may belong to a portion of the driving pedal characteristic only containing deceleration demands.

Preferably, the second adjustment point of the driving pedal characteristic defines the deceleration demand at driving pedal position of 0 %. This describes the case wherein the driving pedal is completely released.

Preferably, the second adjustment point is the point of the driving pedal characteristic with the highest deceleration demand value. It is preferred that this point corresponds to the lowest driving pedal position the driving pedal characteristic is defined for. In particular, the lowest driving pedal position is at 0 % driving pedal input.

The method as described so far preferably uses a driving pedal characteristic with the first and second adjustment point. These points and the current driving pedal position are used as a basis for calculating the current deceleration demand. E.g., between the first and second adjustment point, an interpolation is carried out to calculate the current deceleration demand corresponding to the current driving pedal position. Adjusting this method may include several aspects which are described in the following.

Preferably, the first adjustment point and/or the second adjustment point and/or the third adjustment point are reset in step S4. Resetting one, multiple or all of these points adjusts the calculation method since the driving pedal characteristics depends on these points.

Preferably, a driving pedal position for the driving pedal characteristic is set for resetting the first adjustment point and/or the second adjustment point and/or the third adjustment point. The adjustment points are each defined by a pair of a driving pedal position and a corresponding deceleration demand which results in an adjustment point as part of the driving pedal characteristic. Setting a new driving pedal position means that the respective adjustment point is moved to another driving pedal position in the driving pedal characteristic. This may allow to adjust driving pedal thresholds, like the transition from the portion comprising only deceleration demands to the portion comprising only acceleration demands or to the coasting portion of the driving pedal characteristic.

Additionally or alternatively, a deceleration demand for the driving pedal characteristic is set for resetting the first adjustment point and/or the second adjustment point and/or the third adjustment point. I.e., that the other value, namely the respective deceleration demand, defining the respective adjustment point, is reset.

Resetting both, the driving pedal position and the deceleration demand of the respective adjustment point allows a free arrangement of the adjustment points according to the method.

Further, it is advantageous to carry out the resetting of the adjustment points depending on the current driving or traffic situation and/or depending on current environmental impact. The information about these situations and/or the environmental impact may be detected by the vehicle or may be supplied to the vehicle by other sources. Further the information may be supplied to a device carrying out the method and configured to take said information into account.

Preferably, the adjusting of the calculation method according to step S4 depends on at least one of the following list:
- a vehicle speed,
- a vehicle load,
- a driver input, like an activation of a special mode like the OPD mode,
- a deceleration strategy,
- a road type,
- a traffic volume,
- an environment temperature,
- an information about precipitation such as snow and rain,
- a friction coefficient of the road.

In particular, the setting or resetting of the first adjustment point and/or of the second adjustment point and/or of a third adjustment point, may depend on one or more elements of this list. Alternatively or additionally, the adjustment of a trajectory or of an interpolation method, as described in the following, may also depend on one or more elements of this list.

Preferably, a trajectory for the driving pedal characteristic comprising the first adjustment point and the second adjustment point is set in step S4. This may include a resetting of one or both of the adjustment points. However, it is also possible that the adjustment points are kept in their position, and instead the shape of the driving pedal characteristic is at least adjusted between both points. E.g., when the driving pedal characteristic is provided by a look-up table, it may be switched to another look-up table in step S4. This may be a more degressive or progressive shape and therefore, the driving pedal characteristic can be adjusted with low computing effort.

Alternatively or additionally, an interpolation method is adjusted in step S4 for generating the current deceleration demand according to step S5. If a look-up table is used as described above, the interpolation method may be adjusted for calculating deceleration demand values between single points of the look-up table. Further, if no look-up table is used, the interpolation method may be adjusted for calculating deceleration demand values between the adjustment points. The interpolation method may be switched in step S4 between methods that are linear, quadratic, polynomial, etc.. The use of an interpolation method allows the continuous calculation of current deceleration demands for each current driving pedal position.

According to a preferred embodiment, a pedal position for the driving pedal characteristic is set for resetting the first adjustment point and a deceleration demand for the driving pedal characteristic for the first adjustment point is zero, and a deceleration demand for the driving pedal characteristic is set for resetting the second adjustment point and a pedal position for the driving pedal characteristic for the second adjustment point is zero. According to this embodiment, the first adjustment point is preferably set as the transition point between the portion of the driving pedal characteristic comprising deceleration demands and the portion of the driving pedal characteristic comprising acceleration demands and/or zero deceleration demand. The second adjustment point defines the deceleration demand when the driving pedal is fully released.

Preferably, the third adjustment point for the driving pedal characteristic is reset. The resetting may be similarly to the resetting of the first and second adjustment point. However, the third adjustment point may for example define the transition of the driving pedal characteristic between a portion comprising zero deceleration demand which is a coasting portion and a portion comprising only acceleration demands. I.e., that the coasting portion, or in general another portion of the driving pedal characteristic may be adjusted in the same way like the portion of the driving pedal characteristic for generating deceleration demands. It is also possible to use further adjustment points.

Preferably, since the calculation method is based on the first adjustment point and on the second adjustment point and optionally on the third adjustment point, resetting one, several or all of these points as, for example, described above, may cause an adjustment of the calculation method, since the adjustment points may act as mathematical support points for the driving pedal characteristic. Resetting one or both of these points will therefore lead to a calculation of a different current deceleration demand for the same current driving pedal position. Additionally, or alternatively, adjusting the trajectory as, for example, described above or the interpolation method as, for example, described above may cause an adjustment of the calculation method as well, since this will lead to a calculation of a different current deceleration demand for the same current driving pedal position. The amendment of the calculation of the current deceleration demand may be seen as a dynamical adjusting of the driving pedal characteristic.

According to a preferred embodiment, in step S4 all three adjustment points are reset, wherein the resetting is carried out according to one or several of the aspects above. Preferably, according to this embodiment, the first adjustment point marks the transition by increasing driving pedal input between the deceleration portion and the coasting portion of the driving pedal characteristic. Preferably, the second adjustment point marks the point of the driving pedal characteristic at 0 % driving pedal input. Preferably, the third adjustment point marks the transition by increasing driving pedal input between the coasting portion and the portion comprising only acceleration demand of the driving pedal characteristic.

According to a further embodiment, a method for dynamically adjusting a driving pedal characteristic of a vehicle, in particular, an OPD characteristic of a vehicle, is disclosed, wherein the driving pedal characteristic defines a correlation between a driving pedal position and a deceleration demand.

The method comprises the following steps:
- step S7: providing the third adjustment point of the driving pedal characteristic defined by a third driving pedal position and a third deceleration demand;
- step S3: receiving a current driving pedal position as a driver input;
- step S4: adjusting a calculation method for calculating a current deceleration demand, wherein the calculation method is based on the current driving pedal position and the third adjustment point;
- step S5: calculating the current deceleration demand according to the adjusted calculation method; and
- step S6: outputting the current deceleration demand to the vehicle.

This method may be combined with the aspects of the method above or may stand as a separate method. The adjusting according to step S4 may be carried out according to the aspects above relating to the third adjustment point.

A device for carrying out the method as described above is disclosed, wherein the device comprises electronic control means to carry out the method, and/or wherein the device is configured as a driving pedal.

A vehicle, in particular a commercial vehicle, is disclosed, wherein the vehicle is configured to carry out the method as described above or wherein the vehicle comprises the device as described above.

In the following, embodiments of the invention are described referring to the attached drawings.
- Fig. 1: shows pedal characteristics according to the prior art.
- Fig. 2: shows a flow chart of the method according to a preferred embodiment.
- Fig. 3: shows a way to adjust a driving pedal characteristic according to a first embodiment.
- Fig. 4: shows a way to adjust a driving pedal characteristic according to a second embodiment.
- Fig. 5: shows a way to adjust a driving pedal characteristic according to a third embodiment.

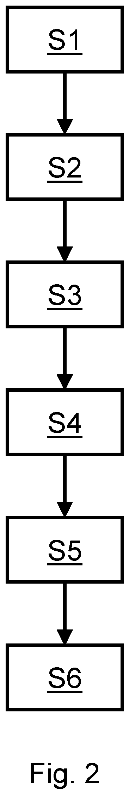

**Fig. 2** shows a flow chart of the method according to a preferred embodiment.

A flow chart of a method for dynamically adjusting a driving pedal characteristic of a vehicle, in particular, of an OPD characteristic of a vehicle, is shown.

The method comprises the following steps:
- step S1: providing a first adjustment point of the driving pedal characteristic defined by a first driving pedal position and a first deceleration demand;
- step S2: providing a second adjustment point of the driving pedal characteristic defined by a second driving pedal position and a second deceleration demand;
- step S3: receiving a current driving pedal position as a driver input;
- step S4: adjusting a calculation method for calculating a current deceleration demand, wherein the calculation method is based on the current driving pedal position and the first adjustment point and the second adjustment point;
- step S5: calculating the current deceleration demand according to the adjusted calculation method; and
- step S6: outputting the current deceleration demand to the vehicle.

In the following drawings, several ways are described to carry out the method above or particular aspects of this method.

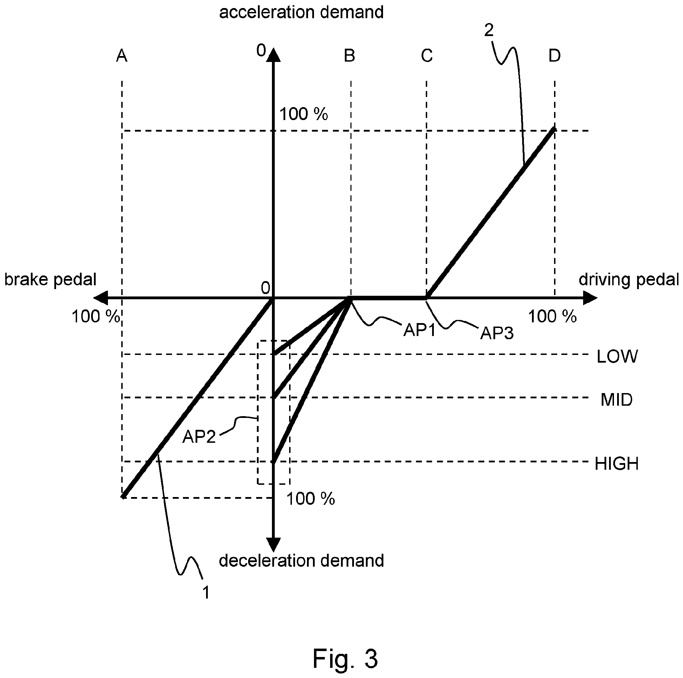

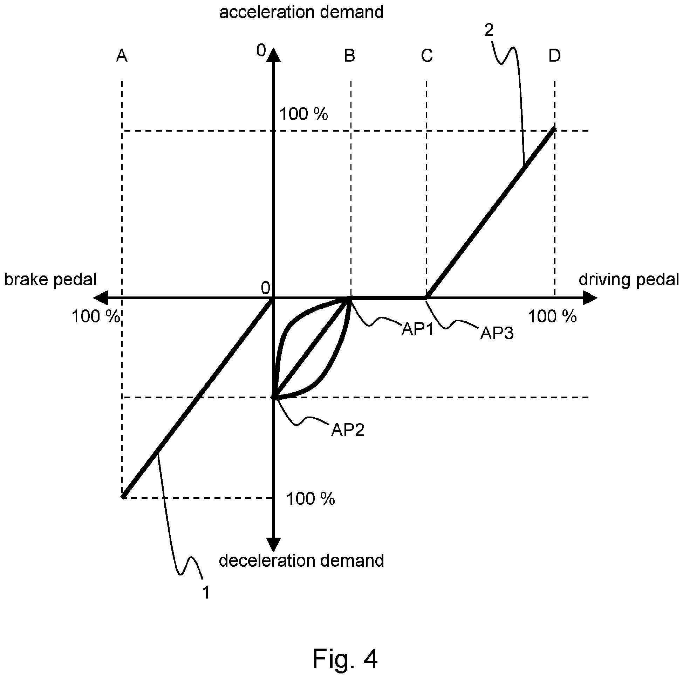

**Fig. 3** shows a way to adjust a driving pedal characteristic 2 according to a first embodiment. The axis and the brake pedal characteristic 1 are identical to Fig. 1. Therefore, reference is made to the respective description above. However, the visualisation of the brake pedal characteristic 1 in Fig. 3 and Fig. 4 shall not be understood as limiting the invention to this brake pedal characteristic 1. Instead, the brake pedal characteristic 1 is only intended to show an example of a brake pedal characteristic that may be provided together with the shown driving pedal characteristics 2.

A first adjustment point AP1 is shown. According to this embodiment, the first adjustment point AP1 defines a transition from a portion of the driving pedal characteristic 2 between 0 % driving pedal input and the point B with deceleration demands to a portion with a deceleration demand of zero between the points B and C which is the coasting portion. I.e., according to this embodiment the first adjustment point AP1 is identical with the point B. In the drawing, the first adjustment point AP1 is the point of the driving pedal characteristic with the lowest deceleration demand value.

A dashed frame marks three second adjustment points AP2 of the driving pedal characteristic 2 at driving pedal position of 0 %. These are defined by three different deceleration demands named as LOW, MID and HIGH.

Regardless which one of the second adjustment points AP2 is regarded, each of these points defines the point of the driving pedal characteristic 2 with the highest deceleration demand value.

Between the first adjustment point AP1 and each of the second adjustment points AP2 a linear characteristic of the driving pedal characteristic 2 is shown. This may be realised by a respective look-up table or by a respective interpolation method between the values of the look-up table or between the first adjustment point AP1 and one of each of the second adjustment points AP2.

In the drawing, a way for resetting the second adjustment point AP2 is shown according to step S4. Depending on the current driving or traffic situation and/or depending on current environmental impact, one of the second adjustment points AP2 is selected in step S4. Thereby, the maximum deceleration value of the driving pedal characteristic 2 at 0 % driving pedal input is selected which leads to a reset of the second adjustment point AP2. Since the second adjustment point AP2 is reset, the connection line between the first adjustment point AP1 and the second adjustment point AP2 is adjusted which leads to an adjustment of the driving pedal characteristic 2.

**Fig. 4** shows a way to adjust a driving pedal characteristic according to a second embodiment.

According to this embodiment, the first adjustment point AP1 and the second adjustment point AP2 are kept, wherein the first adjustment point AP1 is identical to the first adjustment point AP1 shown in Fig. 3 and wherein the second adjustment point AP2 is the point of the driving pedal characteristic 2 at 0 % driving pedal position and with the maximum deceleration demand.

According to this embodiment, trajectory for the driving pedal characteristic 2 comprising the first adjustment point AP1 and the second adjustment point AP2 is set in step S4. The adjustment points AP1, AP2 are kept in their positions and only the shape of the driving pedal characteristic 2 is adjusted between both adjustment points AP1, AP2. E.g., when the driving pedal characteristic is provided by a look-up table, it may be switched to another look-up table in step S4 causing another trajectory. This can be a more degressive (the lower trajectory) or progressive (the upper trajectory) shape or a linear (the middle trajectory) shape. By switching the look-up table, the driving pedal characteristic 2 is adjusted with low computing effort.

Alternatively or additionally, an interpolation method is adjusted in step S4 which is used for generating the current deceleration demand according to step S5. If a look-up table is used, the interpolation method may be adjusted for calculating deceleration demand values between single points of the look-up table. Further, if no look-up table is used, the interpolation method may be adjusted for calculating deceleration demand values between the adjustment points. The interpolation method may be switched in step S4 between methods that are linear, quadratic, polynomial, etc..

The embodiments of Fig. 3 and Fig. 4 can also be combined. I.e., the first and the second adjustment point AP1, AP2 can be reset in step S4 by changing their deceleration demand values and/or their driving pedal values in combination with the switching to another look-up table and/or to another interpolation method for calculating the current deceleration demand.

Further, in Fig. 3 and Fig. 4 an optional third adjustment point AP3 is shown at the point C. This point may also be reset for adjusting the driving pedal characteristic 2. The resetting may be similar to the resetting of the first and second adjustment points AP1, AP2. However, in the drawings, the third adjustment point AP3 defines the transition of the driving pedal characteristic 2 between a portion comprising zero deceleration demand which is a coating portion and a portion comprising acceleration demands. I.e., that the coasting portion, or in general another portion of the driving pedal characteristic 2 may be adjusted in the same way as the portion of the driving pedal characteristic 2 for generating deceleration demands. It is also possible to use further adjustment points.

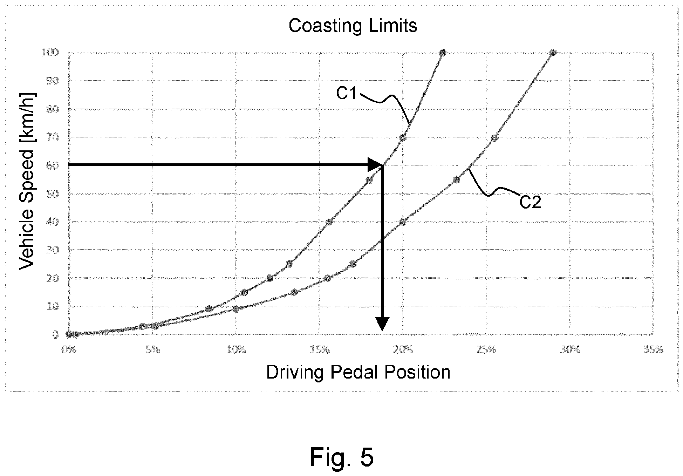

**Fig. 5** shows a way to adjust driving pedal characteristic according to a third embodiment.

In the drawing, two curves are shown, wherein the axis extending to the right comprises a driving pedal position and the axis extending upwards comprises a vehicle speed.

The optional left curve C1 shows a correlation between a driving pedal position and a vehicle speed for the first adjustment point, e.g. for the first adjustment point AP1 shown in Fig. 3 or Fig. 4. Such curve may be provided as a look-up table on a device configured to carry out the method, wherein, when step S4 is carried out, the driving pedal position of the first adjustment point AP1 is reset according to the left curve depending on the current vehicle speed as indicated by the arrows which show the election of the respective driving pedal position for 60 km/h.

The optional right curve C2 shows a correlation between a driving pedal position and a vehicle speed for the optional third adjustment point, e.g. for the first adjustment point AP3 shown in Fig. 3 or Fig. 4. This adjustment point may be reset in step S4 according to the preceding description of resetting the first adjustment point AP1.

Further aspects for dependencies for resetting these points and/or the second adjustment point may be taken into account. The aspects may be the following:
- a vehicle load,
- a driver input,
- a deceleration strategy,
- a road type,
- a traffic volume,
- an environment temperature,
- an information about precipitation such as snow and rain,
- a friction coefficient of the road.

The invention is not limited to the embodiments described above. E.g., the first adjustment point AP1 does not necessarily have to be on the horizontal axis shown in Fig. 3 and Fig. 4 comprising the driving pedal position. It can also be located above or below this axis. Additionally or alternatively, the second adjustment point AP2 does not necessarily have to be on the perpendicular axis shown in Fig. 3 and Fig. 4 comprising the driving pedal position. It can also be located on the right of this axis.

In particular, the aspects shown in Fig. 3, 4 and 5 may be combined. E.g. the second adjustment point AP2 may be set on one of the levels LOW, MID or HIGH, e.g. depending on the vehicle speed and/or the vehicle lead and/or the friction coefficient of the road surface. The first adjustment point AP1 and the third adjustment point AP3 may be reset according to the limits shown in Fig 5. I.e. they are at least dependent on the vehicle speed in this example. Furthermore, the interpolation method or trajectory between the first adjustment point AP1 and the third adjustment point AP3 may be adjusted as it is shown in Fig. 4.

### LIST OF REFERENCE SIGNS

- 1: brake pedal characteristic
- 2: driving pedal characteristic
- 3: adjusted driving pedal characteristic
- A: point of maximum deceleration demand
- AP1: first adjustment point
- AP2: second adjustment point
- AP3: third adjustment point
- B: point
- B': point
- C: point
- C1: curve
- C2: curve
- D: point of maximum acceleration demand
- S1-S6: method steps

## Claims

1. Method for dynamically adjusting a driving pedal characteristic (2) of a vehicle, in particular, an OPD characteristic of a vehicle, wherein the driving pedal characteristic (2) defines a correlation between a driving pedal position and a deceleration demand, the method comprises the following steps:
- step (S1): providing a first adjustment point (AP1) of the driving pedal characteristic (2) defined by a first driving pedal position and a first deceleration demand;
- step (S2): providing a second adjustment point (AP2) of the driving pedal characteristic (2) defined by a second driving pedal position and a second deceleration demand;
- step (S3): receiving a current driving pedal position as a driver input;
- step (S4): adjusting a calculation method for calculating a current deceleration demand, wherein the calculation method is based on the current driving pedal position and the first adjustment point (AP1) and the second adjustment point (AP2);
- step (S5): calculating the current deceleration demand according to the adjusted calculation method; and
- step (S6): outputting the current deceleration demand to the vehicle.

2. Method according to claim 1, wherein
a third adjustment point (AP3) for the driving pedal characteristic (2) is provided,
wherein the adjusting of the calculation method according to step (S4) is additionally based on the third adjustment point (AP3).

3. Method according to claim 1 or 2, wherein
the first adjustment point (AP1) defines a transition from a portion of the driving pedal characteristic (2) comprising deceleration demands to a portion of the driving pedal characteristic (2) comprising an acceleration demand, or to a portion of the driving pedal characteristic (2) comprising no acceleration or deceleration demand.

4. Method according to one of the preceding claims, wherein
the first adjustment point (AP1) is the point of the driving pedal characteristic (2) with the lowest deceleration demand value.

5. Method according to one of the preceding claims, wherein
the second adjustment point (AP2) of the driving pedal characteristic (2) defines the deceleration demand at driving pedal position of 0 %.

6. Method according to one of the preceding claims, wherein
the second adjustment point (AP2) is the point of the driving pedal characteristic (2) with the highest deceleration demand value.

7. Method according to one of the preceding claims, wherein
the first adjustment point (AP1) and/or the second adjustment point (AP2) are reset in step (S4).

8. Method according to claim 7, wherein
a driving pedal position for the driving pedal characteristic (2) is set for resetting the first adjustment point (AP1) and/or the second adjustment point (AP2).

9. Method according to claim 7 or 8, wherein
a deceleration demand for the driving pedal characteristic (2) is set for resetting the first adjustment point (AP1) and/or the second adjustment point (AP2).

10. Method according to one of the preceding claims, wherein
the adjusting of the calculation method according to step (S4) depends on at least one of the following:
- a vehicle speed,
- a vehicle load,
- a driver input,
- a deceleration strategy,
- a road type,
- a traffic volume,
- an environment temperature,
- an information about precipitation such as snow and rain,
- a friction coefficient of the road.

11. Method according to one of the preceding claims, wherein
a trajectory for the driving pedal characteristic (2) comprising the first adjustment point (AP1) and the second adjustment point (AP2) is set in step (S4).

12. Method according to one of the preceding claims, wherein
an interpolation method is adjusted in step (S4) for generating the current deceleration demand according to step (S5).

13. Method according to claim 6 with one of the preceding claims, wherein
a pedal position for the driving pedal characteristic (2) is set for resetting the first adjustment point (AP1) and a deceleration demand for the driving pedal characteristic (2) for the first adjustment point (AP1) is zero, and
a deceleration demand for the driving pedal characteristic (2) is set for resetting the second adjustment point (AP2) and a pedal position for the driving pedal characteristic (2) for the second adjustment point (AP2) is zero.

14. Method according to one of the claims 2 to 13, wherein
the third adjustment point (AP3) defines a transition from a portion of the driving pedal characteristic (2) comprising no acceleration or deceleration demands to a portion of the driving pedal characteristic (2) comprising an acceleration demand, and/or wherein
the third adjustment point (AP3) of the driving pedal characteristic (2) is reset.

15. Device for carrying out the method according to one of the claims 1 to 14, wherein
the device comprises electronic control means configured to carry out the method, and/or wherein
the device is configured as a driving pedal.

16. Vehicle, in particular a commercial vehicle, wherein
the vehicle is configured to carry out the method according to one of the claims 1 to 14 or wherein the vehicle comprises the device according to claim 15.
